# EUROPÄISCHE PATENTSCHRIFT

(11) **EP 1 876 331 B1**
(45) Veröffentlichungstag und Bekanntmachung des Hinweises auf die Patenterteilung: **12.08.2009**
(21) Anmeldenummer: 07011013.5
(22) Anmeldetag: 05.06.2007
(51) Int. Cl.: F01N 3/20, F01N 3/28, B01D 53/94, B01J 23/63, B01J 37/02

(54) **Anordnung zur Verminderung von Stickoxiden in Abgasen**
Assembly for reducing nitrogen oxides in exhaust gases
Dispositif destiné à réduire les oxydes d'azote dans des gaz d'échappement

(30) Priorität: 08.07.2006 DE 102006031660
(43) Veröffentlichungstag der Anmeldung: 09.01.2008
(73) Patentinhaber: MAN Nutzfahrzeuge AG, 80995 München (DE)
(72) Erfinder: Döring, Andreas, 80339 München (DE)

(56) Entgegenhaltungen:
- EP-A- 1 321 641
- WO-A-03/054364
- DE-A1- 10 360 955
- DE-C1- 4 310 962
- DE-U1-6202005 008 14

## Beschreibung

Gegenstand der Erfindung ist eine Anordnung zur Verminderung von Stickoxiden im Abgas von Brennkraftmaschinen mit Hilfe von Ammoniak und/oder ammoniakabspaltenden Reduktionsmitteln gemäß dem Oberbegriff des Anspruches 1, wie z.B. in der WO 03/054364 gezeigt.

Stickoxide gehören zu den limitierten Abgaskomponenten, die während Verbrennungsvorgängen entstehen und deren erlaubte Emissionen immer weiter abgesenkt werden. Die Verringerung der Stickoxide geschieht dabei meist mit Hilfe von Katalysatoren. In sauerstoffreichem Abgas ist zusätzlich ein Reduktionsmittel erforderlich, um die Selektivität und die NO_{X} -Umsätze anzuheben. Bekannt geworden sind diese Verfahren unter dem Sammelbegriff SCR-Verfahren, wobei SCR für "selektive katalytische Reduktion" steht. Ihr Einsatz erfolgt seit vielen Jahren im Kraftwerksbereich und in jüngster Zeit auch bei Brennkraftmaschinen. Eine ausführliche Darstellung solcher Verfahren ist der DE 34 28 232 A1 zu entnehmen. Als SCR-Katalysatoren können V₂O₅-haltige Mischoxide, beispielsweise in der Form V₂O₅/WO₃/TiO₂, verwendet werden. Typische V₂O₅-Anteile liegen dabei zwischen 0,2-3%. Als Reduktionsmittel kommen in der praktischen Anwendung Ammoniak oder Ammoniak abspaltende Verbindungen, wie Harnstoff oder Ammoniumformiat, in fester oder Lösungsform zum Einsatz. Für die Umsetzung von einem Mol Stickstoffmonoxid ist dabei ein Mol Ammoniak notwendig.

4NO+4NH₃+O₂ ⇒ 4N₂ +6H₂O (1)

Wird den SCR-Katalysatoren ein platinhaltiger NO-Oxidationskatalysator zur Bildung von NO₂ vorgeschaltet

2NO+O₂ ⇔ 2NO₂ (2)

so kann die SCR-Reaktion erheblich beschleunigt und die Tieftemperaturaktivität merklich angehoben werden.

NO+2NH₃+NO₂ ⇔ 2N₂+3H₂O (3)

Besondere Probleme bereitet das SCR-Verfahren bei der Stickoxidreduzierung von Brennkraftmaschinen und hier speziell in Fahrzeugen, da darauf geachtet werden muss, dass es nicht zur Emission von unverbrauchtem Ammoniak kommt. Anders als im Kraftwerksbereich stehen in Fahrzeugen keine ausreichend genauen und haltbaren Abgassensoren zur Regelung des Systems und damit zur Vermeidung von NH₃-Emissionen bei Überdosierungen des Reduktionsmittels zur Verfügung. Zudem ist der Einsatz von V₂O₅ problematisch, da es bei Temperaturen über 650°C sublimiert, so dass in jüngster Zeit auch Zeolithe mit den Aktivkomponenten Eisen und/oder Kupfer und/oder Kobalt zum Einsatz kommen.

Um trotz fehlender Sensorik unerwünschte NH₃-Emissionen zu vermeiden, müssten ohne zusätzliche Maßnahmen die SCR-Katalysatoren deutlich überdimensioniert werden, um ausreichend Sicherheit gegenüber Ammoniakschlupf zu gewährleisten. Verbessern lässt sich die Situation, wenn dem SCR-Katalysator ein NH₃-Oxidationskatalyator nachgeschaltet wird. Eine solche Anordnung ist z. B. der DE 37 33 501 A1 zu entnehmen. Weiterhin ist es aus der EP 410 440 B1 bekannt, den SCR-Katalysator und den NH₃-Oxidationskatalysator auf einem gemeinsamen Träger auszubilden.

Als Aktivmaterial für den NH₃-Oxidationskatalysator können Edelmetalle der Platingruppe sowie deren Oxide zum Einsatz kommen. In Verbindung mit solchen edelmetallbeschichteten Katalysatoren ist es aus der EP 0 656 812 B1 bekannt, Metallfolienkatalysatoren, die Welllagen und Glattlagen im Wechsel aufweisen und so Längskanäle ausbilden, durch unterschiedliche Beschichtung der Folien so auszugestalten, dass in den Längskanälen unterschiedlich beschichtete katalytische Oberflächen parallel verlaufend angeordnet sind.

Die in SCR-Katalysatoranlagen mit Ammoniaksperrkatalysator dem NH₃-Oxidationskatalysator zugedachte Aufgabe, überschüssiges NH₃ zu Stickstoff zu oxidieren, vermag dieser in der Praxis, wegen der zu geringen Selektivität der z. B. platinhaltigen aktiven Komponente nur unzureichend zu lösen, so dass die Oxidation, wie in den nachfolgenden Formeln gezeigt, nicht bei der Oxidationsstufe [0], sondern bei der Oxidationsstufe [+1], [+2] oder gar erst [+4] endet und somit wieder Stickoxide entstehen.

4NH₃ +3O₂ ⇒ 2N₂+6H₂O [0] (4)

2 NH₃ + 2,5 O₂ ⇒ 2 NO + 3 H₂O [+2] (5)

2NO+O₂ ⇒ 2NO₂ [+4] (6)

NH₃ +NO₂ ⇒ 2NO+H₂O [+2] (7)

2NH₃ +2NO₂+½O₂ ⇒ 2N₂O+H₂O [+1] (8)

Ein besonders problematisches Nebenprodukt ist dabei Lachgas (N₂O), das nach (8) in der Oxidationsstufe [+1] über die Zwischenstufe Stickstoffdioxid erzeugt wird. Es ist sehr stabil und kann, einmal gebildet, kaum mehr zerstört werden.

Ausgehend von den vorstehend dargelegten Sachverhalten ist es Aufgabe der Erfindung Stickoxide und NH₃ aus dem Abgas einer Brennkraftmaschine zu einem möglichst hohen Prozentsatz zu entfernen, ohne dass dabei die problematische Verbindung Lachgas (N₂O) entsteht.

Gelöst wird die Aufgabe durch die Merkmale des Anspruches 1, vorteilhafte Ausgestaltungen sind in den abhängigen Ansprüchen gekennzeichnet.

Die erfindungsgemäße Anordnung löst das Problem der möglichst hohen Umwandlungsrate von Stickoxiden im Abgas von Brennkraftmaschinen mittels selektiver katalytischer Reduktion in Anwesenheit von Ammoniak und möglichst vollständiger Vermeidung von Ammoniakschlupf und der gleichzeitigen Vermeidung des Entstehens von Lachgas am NH₃-Oxidationskatalysator dadurch, dass für das als Vorstufe zum Lachgas an diesem gebildete NO₂ eine Reaktionsalternative geschaffen wird, die gegenüber der Lachgasbildung konkurrierend und bevorzugt abläuft. Erreicht wird dies in vorteilhafter Weise dadurch, dass einem ersten Katalysatorelement mit SCR-Aktivität zum Bewirken der selektiven katalytischen Reduktion ein zweites, im Querschnitt wabenförmiges, einzelne Strömungskanäle ausbildendes Katalysatorelement nachgeordnet ist, wobei die Strömungskanäle des zweiten Katalysatorelementes sowohl wenigstens einen Bereich mit SCR-Aktivität, als auch wenigstens einen Bereich mit NH₃-Oxidationsaktivität auf ihrer Innenfläche aufweisen. Die Strömungskanäle können dabei vorteilhaft so ausgebildet sein, dass sie auf einem ersten Teil ihres Umfanges entlang ihrer Längsausdehnung eine SCR-Aktivität aufweisen und auf einem zweiten Teil ihres Umfanges entlang ihrer Längsausdehnung eine NH₃-Oxidationsaktivität.

Alternativ besteht die Möglichkeit das zweite Katalysatorelement so auszubilden, dass entlang der Strömungsrichtung alternierend im Wechsel Bereiche mit NH₃-Oxidationsaktivität und Bereiche mit SCR-Aktivität aufeinander folgen. Die Bereiche können dabei unregelmäßig angeordnet sein.

Die Strömungskanäle können zueinander parallel oder zueinander in einem Winkel verlaufend ausgebildet sind.

Weiter kann es für eine Homogenisierung des Abgasstromes von Vorteil sein, durch Perforation und/ oder Strömungsleitbleche in den Kanalwänden der Strömungskanäle zwischen jeweils wenigstens zwei benachbarten Strömungskanälen ein Strömungsaustausch zu ermöglichen, was die NOₓ-Umsetzungsrate günstig beeinflusst.

Die Wirkungsweise der Anordnung ist dabei derart, dass zunächst, wie üblich, in dem ersten Katalysatorelement mit SCR-Aktivität mittels selektiver katalytischer Reduktion im Abgasstrom vorhandene Stickoxide mit Hilfe des im Abgasstrom vorhandenen NH₃ zu Stickstoff und Wasser umgesetzt werden. Durch die selektive katalytische Reduktion nicht verbrauchtes NH₃ wird im zweiten Katalysatorelement an den Oberflächenteilen der Strömungskanäle, die NH₃-Oxidationsaktivität aufweisen, mit Hilfe des im Abgasstrom enthaltenen Restsauerstoffes unter anderem zu NO und Wasser umgesetzt. Das so entstandene NO und eventuell noch im Abgasstrom vorhandenes NO werden zusammen mit im Abgasstrom vorhandenem Restsauerstoff an den gleichen Oberflächenteilen zu NO₂ oxidiert, das wiederum zusammen mit eventuell noch im Abgasstrom vorhandenem NO₂, dem im Abgasstrom vorhandenen Resten an NO und dem im Abgasstrom ebenfalls vorhandenen restlichen NH₃ an den Oberflächenteilen der Strömungskanäle, die SCR-Aktivität aufweisen, durch selektive katalytische Reduktion zu den Wunschprodukten Stickstoff und Wasserdampf umgesetzt wird.

Die vorstehende Reaktionskette zeigt, dass durch die erfindungsgemäße Anordnung nicht nur die Entstehung von Lachgas vermieden werden kann, sondern dass auch durch die nachgelagerte zweite selektive katalytische Reduktion der Anteil der restlichen Stickoxide nochmals in vorteilhafter Weise vermindert wird.

Für die Teil der Strömungskanäle des zweiten Katalysatorelementes, die SCR-Aktivität aufweisen, lässt sich vorteilhaft V₂O₅ als Aktivkomponente einsetzen, beispielsweise als Mischoxid in der Form V₂O₅/WO₃/TiO₂ mit einem typischen V₂O₅ -Anteil zwischen 0,2-5%. Aber auch eisen- und/oder kupfer- und/oder kobalthaltige Zeolithe kommen als besonders gut geeignete Aktivkomponenten in Frage.

Der Teil der Strömungskanäle, der die NH₃-Oxidationsaktivität aufweist, beinhaltet als besonders geeignete und damit vorteilhafte Aktivkomponenten Platin und/oder Palladium und/oder Iridium und/oder Rhodium und/oder Ruthenium und/oder Kobalt und/oder Nickel und/oder deren Oxid und/oder IrTiO_{X}. Auch diese Aktivkomponenten können in eine Matrix aus Zeolithen eingebettet sein.

Als Zeolithe, sowohl für die Einbettung der Aktivkomponenten mit SCR-Aktivität, als auch der Aktivkomponenten mit NH₃-Oxidationsaktivität, kommen vorteilhaft solche der Typen ZSM-5 und/oder OSI und/oder EPI und/oder AEN und/oder MFI und/oder FAU und/oder BEA zum Einsatz.

Wenn es sich bei dem zweiten Katalysatorelement um einen durch Extrudieren hergestellten Vollkatalysator handelt, ist es von Vorteil, die unterschiedlich aktiven Bereiche in den Strömungskanälen beim Extrudiervorgang mit zu erzeugen, indem durch ein entsprechend modifiziertes Spritzwerkzeug für jeden Strömungskanal teilselektiv eine Beschichtung oder Imprägnierung beigegeben wird, die die katalytischen Eigenschaften des Strömungskanals auf einen Teil seiner wirksamen Oberfläche gegenüber dem Grundmaterial in der gewünschten Weise verändert. Welches Material dabei zugegeben wird, hängt vom verwendeten Grundmaterial ab.

In dem Fall, dass es sich bei dem zweite Katalysatorelement um einen Lagenkatalysator handelt, gemeint ist damit ein aus einzelnen Lagen aufgebauter Katalysator, können die Lagen sowohl aus Vollkatalysatormaterial als auch aus mit Katalysatormaterial beschichteten inerten Trägern bestehen. Bei den letztgenannten kann die Beschichtung in vorteilhafter Weise auf Metallträger (Eisen-Chrom-Nickel-Legierungen oder Aluminium) und/oder Keramikträger (Cordierit) und/oder auf Glas- und/oder Keramik- und/oder Silikatmatten aufgebracht sein.

Um den Fertigungsprozess möglichst einfach und damit kostengünstig zu gestalten, kann es weiter vorteilhaft sein, das erste Katalysatorelement und das zweite Katalysatorelement auf einem gemeinsamen Träger anzuordnen und/ oder einstückig auszuführen. Eine in dieser Hinsicht besonders vorteilhafte Variante ist dann gegeben, wenn das erste Katalysatorelement und das zweite Katalysatorelement aus einzelnen Lagen bestehen, die einen im Querschnitt wabenförmigen, einzelne Strömungskanäle umfassenden Katalysatorkörper ausbilden. Ein solcher Katalysator lässt sich so fertigen, dass die einzelnen Lagen beiden Katalysatorelementen gemeinsam sind und durch entsprechende Beschichtung oder Imprägnierung in ihrem das erste Katalysatorelement bildenden Bereich SCR-Aktivität aufweisen und in ihrem das zweite Katalysatorelement ausbildenden Bereich von Lage zu Lage abwechselnd SCR-Aktivität und NH₃-Oxidationsaktivität. Eine Mehrzahl entsprechend präparierter Lagen wird dann durch Aufschichten und/ oder Aufwickeln zu wabenförmigen Gebilden geformt. Die Strömungskanäle können dabei zueinander parallel oder zueinander in einem Winkel verlaufend ausgebildet sein.

Zur Optimierung der NOₓ-Umsetzungsrate kann es von Vorteil sein, das die SCR-Aktivität ausbildende Katalysatormaterial im Bereich des ersten Katalysatorelementes unterschiedlich zu dem Katalysatormaterial zu wählen, das die SCR-Aktivität im zweiten Katalysatorelement ausbildet.

Weiter kann es für die NOₓ-Umsetzungsrate von Vorteil sein, dass das die SCR-Aktivität ausbildende Katalysatormaterial im Bereich des ersten Katalysatorelementes und/ oder im Bereich des zweiten Katalysatorelementes in seiner chemischen Zusammensetzung entlang der Strömungsrichtung des Abgases variiert.

Entsprechendes gilt auch für das die NH₃-Oxidationsaktivität des zweiten Katalysatorelementes ausbildende Katalysatormaterial, auch hier lässt sich die NOₓ-Umsetzungsrate positiv beeinflussen, wenn das Katalysatorelement in seiner chemischen Zusammensetzung entlang der Strömungsrichtung des Abgases variiert.

Durch die vorstehend angesprochene Variation des Katalysatormaterials lassen sich die ablaufenden chemischen Prozesse hinsichtlich Selektivität und Umsetzungsrate gezielt beeinflussen.

Weiter kann es zur Verbesserung des NO_{X}-Umsatzes vorteilhaft sein, der Anordnung aus erstem Katalysatorelement und zweitem Katalysatorelement einen platin- und/oder platinoxidhaltigen Oxidationskatalysator zur Oxidation von NO zu NO₂ und/ oder einen Hydrolysekatalysator vorzuschalten. Werden Oxidationskatalysator und Hydrolysekatalysator verwendet, sind diese vorteilhaft im Abgasstrom parallel anzuordnen, wobei die Zuführung des Reduktionsmittels unmittelbar vor den Hydrolysekatalysator erfolgt.

Um die Bereiche des Katalysatorelementes mit unterschiedlicher Aktivität zu erzeugen, bieten sich eine Reihe von Möglichkeiten an. So können die entsprechend aktiven Katalysatorbereiche durch Tauchen des Trägers in unterschiedliche, den jeweiligen Katalysator enthaltende Lösungen und anschließendes Kalzinieren erzeugt werden. Auch durch Imprägnieren einer bereits auf den Träger aufgebrachten Katalysatorschicht oder eines Vollkatalysators sind die Bereiche mit unterschiedlicher Aktivität herstellbar. Bei Verwendung von Keramikträgern (Cordierit) und/oder Metallfolienträgern (Eisen-Chrom-Nickel-Legierung oder Aluminium) und/oder Glas-und/oder Keramik- und/oder Silikatmatten als Träger besteht schließlich die Möglichkeit, die einzelnen Folien und/ oder Matten durch Besprühen und/oder Bestreichen und/oder Tauchen zu beschichtet und erst im Anschluss an eine Endbehandlung, die einen Trockenvorgang umfasst, zu einem Wabenkörper aufzuschichten und/ oder aufzurollen.

Beispiele der erfindungsgemäßen Anordnung sind nachfolgend unter Zuhilfenahme der Zeichnungen näher erläutert, es zeigen:
- Fig. 1.: Eine Anordnung zur selektiven katalytischen Reduktion von Abgasen nach dem Stand der Technik
- Fig. 2: Eine Prinzipdarstellung eines Schnittes quer zur Durchströmungsrichtung durch ein Katalysatorelement mit SCR- Aktivität und NH₃-Oxidationsaktivität
- Fig. 3: Eine Prinzipdarstellung eines Schnittes parallel zur Durchströmungsrichtung durch eine Anordnung aus einem ersten Katalysatorelement mit SCR-Aktivität und einem zweiten Katalysatorelement mit SCR-Aktivität und NH₃-Oxidationsaktivität
- Fig. 4: Die Anordnung nach Fig. 3 einstückig ausgebildet
- Fig. 5: Das Reaktionsschema eines Ammoniaksperrkatalysators nach dem Stand der Technik
- Fig. 6: Das Reaktionsschema eines Katalysatorelementes mit SCR-Aktivität und NH₃-Oxidationsaktivität

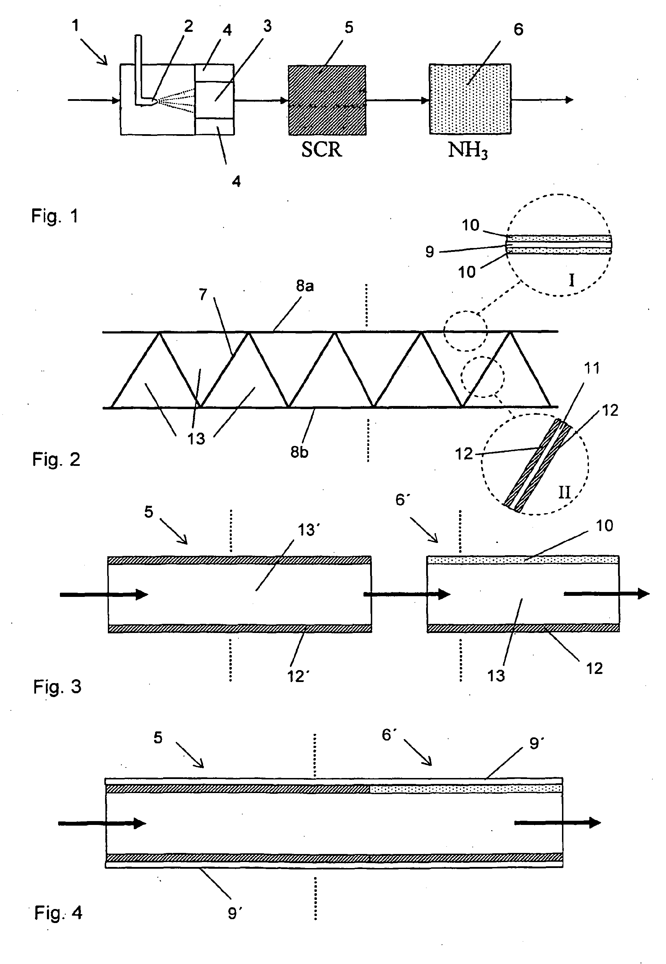

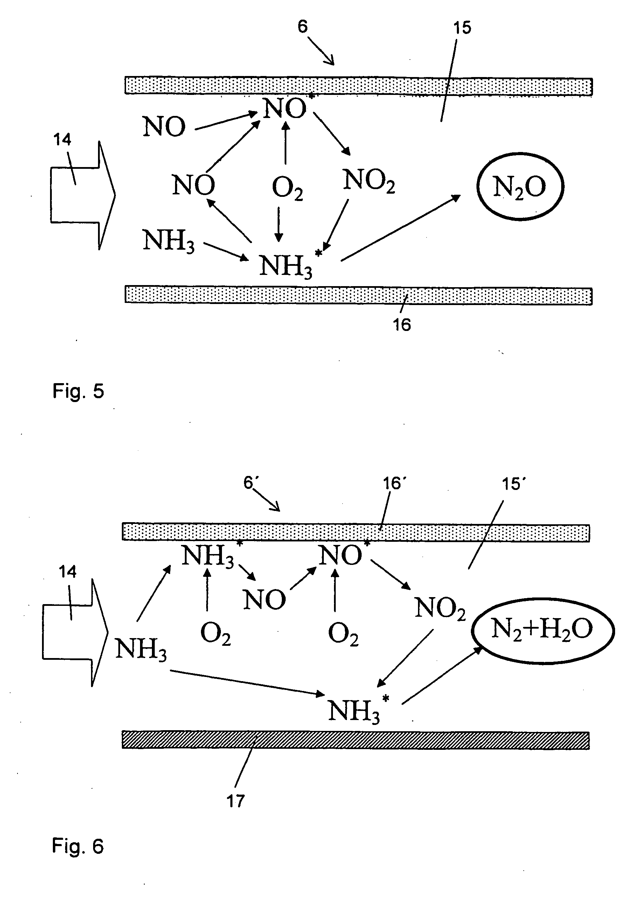

Eine Anordnung zur selektiven katalytischen Reduktion, wie sie dem Stand der Technik entspricht, ist schematisch dargestellt in Fig. 1 gezeigt. Die von einer Brennkraftmaschine (nicht dargestellt) durch die Verbrennungsvorgänge erzeugten Abgase, in Fig. 1 durch die Pfeile symbolisiert, gelangen zunächst in einen Abgasaufbereitungstrakt 1, in welchem dem heißen Abgas ein Reduktionsmittel möglichst motornah beigegeben wird. Bei dem Reduktionsmittel handelt es sich, wie bei Kraftfahrzeugen mit SCR-Katalysator in der Praxis gebräuchlich, um eine wässrige Harnstofflösung, selbstverständlich ist aber auch die Zugabe von Harnstoff in fester Form denkbar, wie dies in der einschlägigen Fachliteratur bereits ausführlich beschrieben ist. Die Zumessung erfolgt in Abhängigkeit von Betriebsparametern der Brennkraftmaschine, gesteuert über eine Motorsteuereinheit (nicht dargestellt), in der Weise, dass über eine Düse 2 die wässrige Harnstofflösung unmittelbar vor einem Hydrolysekatalysator 3 in den Abgasstrom eingesprüht wird. Die Aufgabe des Hydrolysekatalysators 3 ist es, die wässrige Harnstofflösung unter Vermeidung von Nebenprodukten möglichst vollständig in Ammoniak und Wasserdampf überzuführen. Unter bestimmten Voraussetzungen erfolgt diese Aufspaltung auch ohne Hydrolysekatalysator hinreichend, so dass dieser dann entfallen kann. Parallel zum Hydrolysekatalysator 3 ist ein Oxidationskatalysator 4 angeordnet, dessen Aufgabe darin besteht, nach der vorstehend mit (2) bezeichneten Reaktion einen Teil des im Abgas enthaltenen Stickstoffmonoxides mittels des im Abgas vorhandenen überschüssigen Sauerstoffes zu Stickstoffdioxid aufzuoxidieren, das in der nachfolgenden SCR-Reaktion wesentlich reaktionsfreudiger ist. Die eigentliche selektive katalytische Reduktion der Stickoxide erfolgt in stromab zum Abgasaufbereitungstrakt 1 gelegenen ersten Katalysatorelement 5 mit SCR-Aktivität, das einen möglichst großen Anteil der im Abgas vorhandenen Stickoxide (NO_{X}) bei gleichzeitiger hoher Selektivität der Reduktion in Stickstoff und Wasserdampf überführen soll, ohne dass überschüssiger Ammoniak (NH₃) im Abgasstrom verbleibt. In anbetracht der ständig wechselnden Betriebsbedingungen einer in einem Kraftfahrzeug betriebenen Brennkraftmaschine ist offensichtlich, dass die gewünschte Umsetzung nur unvollkommen gelingen kann. Um in solchen Fällen ungenügender Umsetzung zu verhindern, dass giftiger Ammoniak mit dem teilgereinigten Abgas an die Außenluft abgegeben wird, ist dem ersten Katalysatorelement 5 mit SCR-Aktivität ein zweites Katalysatorelement 6 mit NH₃-Oxidationsaktivität nachgeordnet, mit dem das überschüssige NH₃ in Stickstoff und Wasserdampf übergeführt werden soll. Diese Oxidationsreaktion läuft allerdings, wie im Reaktionsschema gemäß Fig. 5 dargestellt, nicht selektiv genug ab, so dass, wiederum nach den Reaktionen (4) bis (8), Stickoxide entstehen. Dabei ist, wie bereits ausgeführt, die Reaktion nach (8) besonders problematisch, weil eines der Reaktionsprodukte N₂O, also Lachgas ist.

Um die Bildung von Lachgas zu vermeiden, wird an Stelle des NH₃-Oxidationskatalysators 6 ein Katalysatorelement eingesetzt, das nachfolgend hinsichtlich Aufbau und Funktion beschrieben ist.

Fig. 2 zeigt in Prinzipdarstellung einen Schnitt quer zur Durchströmungsrichtung des Abgases durch ein zweites Katalysatorelement 6' mit SCR- und NH₃-Oxidationsaktivität. Es handelt sich dabei um ein im Querschnitt wabenförmiges, aus einer Vielzahl von Glattlagen und Welllagen aufgebautes Katalysatorelement auf Metallträgerbasis, wobei in Fig. 2 nur ein Ausschnitt dargestellt ist, der eine Welllage 7 zeigt, die von zwei Glattlagen 8a, 8b begrenzt ist. Der Aufbau der Welllagen 7 und Glattlagen 8a, 8b ist in den vergrößert dargestellten Bereichen I und II erkennbar. Wie dort dargestellt, bestehen die Glattlagen 8a, 8b jeweils aus einer glatten Trägerfolie 9 die auf beiden Seiten mit einer NH₃-Oxidationsbeschichtung 10 versehen ist. Der Zweck dieser NH₃-Oxidationsbeschichtung 10 besteht darin, das im Abgas vorhandenes NH₃ mit Hilfe des im Abgas vorhandenen Restsauerstoffes zu NO bzw. NO₂ oxidiert. Die Welllage 9 besteht aus einer leporelloförmig vorgeformten Trägerfolie 11, auf die, ebenfalls beidseitig, eine SCR-Beschichtung 12 aufgebracht ist. Diese katalytische Beschichtung wiederum hat den Zweck, in Gegenwart von NH₃ die im Abgas vorhandenen Stickoxide in einer selektiven katalytischen Reduktionsreaktion zu Stickstoff und Wasserdampf zu reduzieren. Die beiden Glattlagen 8a, 8b und die dazwischen angeordnete Welllage 7 bilden dabei gleichartige Strömungskanäle 13 aus, die auf ihrer Innenfläche sowohl Bereiche mit NH₃-Oxitationsaktivität als auch Bereiche mit SCR-Aktivität aufweisen. Die in diesen Strömungskanälen 13 ablaufenden chemischen Reaktionen werden später ausführlich erläutert.

Wie bereits ausgeführt, besteht die Anordnung aus einer Vielzahl parallel angeordneter Glattlagen 8a, 8b und Welllagen 7, man hat sich deshalb die Abbildung in Fig. 2 jeweils nach oben und unten um eine Welllage und daran anschließende weitere Glattlagen und Welllagen erweitert vorzustellen, wie dies durch die Punkte angedeutet ist.

Die Abfolge der unterschiedlich aktiven Bereiche der Katalysatoranordnung aus einem ersten Katalysatorelement mit SCR-Aktivität und eines zweiten Katalysatorelementes 6' mit SCR- und NH₃-Oxidationsaktivität ist in Fig. 3 in Prinzipdarstellung gezeigt. Zur besseren Übersicht beschränkt sich die Darstellung auf nur einen Strömungskanal sowohl des ersten Katalysatorelementes 5 als auch des zweiten Katalysatorelementes 6' aus jeweils einer Vielzahl gleichartiger Strömungskanäle (in Fig. 3 durch Punkte angedeutet), wobei als Darstellungsform eine Schnittdarstellung parallel zur Strömungsrichtung des Abgases gewählt ist. Die Strömungsrichtung des Abgases wird dabei durch die in Strömungsrichtung zeigenden Pfeile angedeutet.

Der dem ersten Katalysatorelement zugeordnete Strömungskanal 13' weist auf seiner gesamten Innenfläche eine SCR-Beschichtung 12' auf, so dass dort die selektive katalytische Reduktion nach den Reaktionen (1) und (3) ablaufen kann. An den Strömungskanal 13' schließt sich der dem zweiten Katalysatorelement zugeordnete Strömungskanal 13 an, der, wie bereits zu Figur 2 beschrieben, auf einem ersten Teil seiner Innenfläche eine NH₃-Oxidationsbeschichtung 10 und auf einem anderen Teil seiner Innenfläche SCR-Beschichtung 12 aufweist. Die Beschichtungen befinden sich auf Trägerfolien (in Fig. 3 nicht dargestellt), wie sie bereits zu Figur 2 beschrieben wurden. Die gezeigten SCR-Beschichtungen 12, 12' können bezüglich ihrer chemischen Zusammensetzung gleich oder unterschiedlich sein. Welcher Variante der Vorzug zu geben ist, hängt vom konkreten Anwendungsfall ab.

In einer alternativen Ausführung können die Beschichtungen, wie in Fig. 4 gezeigt, auch auf einem dem ersten Katalysatorelement 5 und dem zweiten Katalysatorelement 6' gemeinsamen Träger 9' angeordnet sein. Dies hat den Vorteil, dass die Träger in einem Arbeitsgang beschichtet werden können und die Katalysatoranordnung in einem Arbeitszyklus hergestellt werden kann.

Die Beschichtung der Metallfolienträger, wie sie vorstehend angesprochen ist, kann durch Aufsprühen, Aufstreichen oder Tauchen bewerkstelligt werden, derartige Beschichtungsmethoden sind hinreichend bekannt. Auch das nachträgliche Imprägnieren bereits aufgebrachter Beschichtungen mit entsprechend katalytisch wirksame Bestandteile enthaltenden Lösungen ist denkbar.

Für die SCR-Beschichtung ist V₂O₅ als Aktivkomponente z.B. als Mischoxide in der Form V₂O₅/WO₃/TiO₂ mit einem typischen V₂O₅ -Anteil zwischen 0,2-5% einsetzbar. Weitere Varianten für die SCR-Beschichtung können eisen-, kupfer- oder kobalthaltige Zeolithe bzw. Mischformen davon sein.

Die NH₃-Beschichtung kann als Aktivmaterialien Platin, Palladium, Iridium, Rhodium, Ruthenium, Kobalt oder Nickel bzw. deren Oxid sowie Mischungen daraus enthalten, auch IrTiO_{X} ist als Aktivmaterial denkbar. Auch hier ist das Einbetten der Aktivkomponenten in eine Matrix aus Zeolithen möglich.

Besonders geeignete Zeolithe-Typen für die vorstehenden Zeolith-Varianten sind ZSM-5, OSI, EPI, AEN, MFI, FAU, BEA.

Bei den vorstehend beschriebenen Metallfolienträgern kann es sich um eine Legierung handeln, die Elemente wie Fe, Cr, Al, Ni enthält. Neben solchen metallischen Trägern sind auch nichtmetallische Träger wie Keramikträger aus Cordierit oder Glas-, Keramik- oder Silikatmatten verwendbar.

Abweichend vom vorstehend beschriebenen Beispiel kann es sich sowohl bei dem ersten Katalysatorelement als auch bei dem zweiten Katalysatorelement um einen durch Extrudieren hergestellten Vollkatalysator handeln. In einem solchen Fall sind die unterschiedlich aktiven Bereiche in den Strömungskanälen beim Extrudiervorgang mit zu erzeugen, indem durch ein entsprechend modifiziertes Spritzwerkzeug, für jeden Strömungskanal teilselektiv, eine Beschichtung oder Imprägnierung beigegeben wird, die die katalytischen Eigenschaften des Strömungskanals auf einem Teil seiner wirksamen Oberfläche gegenüber dem Grundmaterial in der gewünschten Wiese verändert. Welches Material dabei zugegeben wird, hängt vom verwendeten Grundmaterial ab.

In Abweichung zum vorstehend beschriebenen Beispiel müssen weder die SCR-aktiven Bereiche, noch die NH₃-Oxidationsaktiven Bereiche in einem Strömungskanal zusammenhängende Flächen sein, es ist vielmehr denkbar, dass sich auf einer SCR-aktiven Innenfläche eines Strömungskanals NH₃-Oxidationsaktive Inseln befinden und umgekehrt, dass sich auf einer NH₃-oxidationsaktiven Innenfläche eines Strömungskanals SCR-Aktive Inseln befinden. Entsprechende Beschichtungen ließen sich z. B. dadurch erzeugen, dass Beschichtungs- oder Imprägnierlösungen tröpfchenförmig auf eine Beschichtung aus Aktivmaterial des jeweils anderen Typs aufgebracht werden.

Zur Erläuterung der Funktionsweise eines NH₃-Oxidationskatalysators nach dem Stand der Technik und einer Anordnungen gemäß der Erfindung mit sowohl NH₃-Oxidationsaktivität als auch SCR-Aktivität, werden nachfolgend die Reaktionsketten anhand der Beispiele nach Fig. 5 und Fig. 6 aufgezeigt. Dabei ist vorausgesetzt, dass eine in den Figuren 5 und 6 nicht dargestellte Einrichtung zur selektiven katalytischen Reduktion den jeweils dargestellten Anordnungen vorgeschaltet ist.

Fig. 5 zeigt einen von Abgas 14 aus einem vorgelagerten SCR-Katalysator (nicht dargestellt) beaufschlagten Strömungskanal 15 eines konventionellen NH₃-Oxidationskatalysators 6. In einem solchen Strömungskanal 15, dessen gesamte Innenfläche mit NH₃-oxitationsaktivem Katalysatormaterial versehen ist, laufen die bereits eingangs erwähnten Oxidationsreaktionen (4) bis (8) ab. Dabei ist die Reaktion nach (4) gewünscht, sie bildet die Wunschprodukte Stickstoff und Wasserdampf. Nicht gewünscht ist hingegen die Reaktion (5), die neben Wasserdampf NO produziert, das zusammen mit im Abgas 14 eventuell noch enthaltenen Resten an NO und dem im Abgas 14 enthaltenen Sauerstoff zu NO₂ oxidiert. Mit diesem NO₂ als Vorstufe kommt es in Verbindung mit im Abgas 14 enthaltenen Resten von NH₃ entweder zu einer Reaktion nach (7) oder mittels des noch im Abgas 14 enthaltenen Sauerstoffes zu der Reaktion (8). Im ersten Fall entstehen NO und Wasserdampf wobei das NO nach (6) wieder zu NO₂ oxidiert werden kann und dann zu den vorstehenden Reaktionen nach (7) oder (8) führt. Im zweiten Fall entsteht neben Wasserdampf das problematische N₂O (Lachgas).

Wird an Stelle des NH₃-Oxidationskatalysators ein Katalysator eingesetzt der quasi parallel sowohl NH₃-Oxidationsaktivität als auch SCR-Aktivität aufweist, also wie in Fig. 6 gezeigt über Strömungskanäle mit zueinander benachbarten NH₃-Katalysator-Beschichtungen 16' und SCR-Katalysator-Beschichtungen 17 verfügt, läuft die Reaktion zunächst bis zur Bildung von NO₂ identisch zum Beispiel nach Figur 5 ab, das gebildete NO₂ reagiert aber zusammen mit eventuell noch im Abgas 14 vorhandenem NO₂, dem im Abgas 14 vorhandenen Resten an NO und dem im Abgas 14 ebenfalls vorhandenen restlichen NH₃ an der SCR-Katalysator-Beschichtung 17 des Strömungskanals 15', durch selektive katalytischer Reduktion zu den Wunschprodukten Stickstoff und Wasser (Dampf).

Durch die vorstehend beschriebene Anordnung wird nicht nur die Bildung von Lachgas vermieden, es wird vielmehr durch die der NH₃-Oxidation nachgelagerte zweite SCR-Reaktion die Umsetzungsrate für Stickoxide insgesamt verbessert.

Die vorstehend beschriebenen Ausführungen lassen sich selbstverständlich mit dem Fachmann zugänglichem Fachwissen auf vielfältige Weise ausgestalten, ohne den grundlegenden erfinderischen Gedanken zu verlassen, den beschriebenen Ausführungsformen kommt somit nur Beispielcharakter zu.

## Patentansprüche

1. Anordnung zur Verminderung von Stickoxiden im Abgas von Brennkraftmaschinen mit Hilfe von dem Abgasstrom beigegebenem Ammoniak und/oder dem Abgasstrom beigegebenen Reduktionsmitteln, die im Abgasstrom Ammoniak freisetzen, bestehend aus einem ersten Katalysatorelement (5) mit SCR-Aktivität zum Bewirken einer selektiven katalytischen Reduktion und einem nachgeordneten im Querschnitt wabenförmigen, einzelne Strömungskanäle (13, 15') ausbildenden zweiten Katalysatorelement (6') wobei die Strömungskanäle (13, 15') des zweiten Katalysatorelementes (6') jeweils sowohl wenigstens einen Bereich mit SCR-Aktivität (12, 17) als auch wenigstens einen Bereich mit NH₃-Oxidationsaktivität (10, 16') auf ihrer Innenfläche aufweisen, und wobei
- in dem ersten Katalysatorelement mit SCR-Aktivität im Wege der selektiven katalytischen Reduktion im Abgasstrom vorhandene Stickoxide mit Hilfe des im Abgasstrom vorhandenen NH₃ zu Stickstoff und Wasser umgesetzt werden,
- durch die selektive katalytische Reduktion nicht umgesetztes NH₃ im zweiten Katalysatorelement an den Oberflächenteilen der Strömungskanäle, die NH₃-Oxidationsaktivität aufweisen, mit Hilfe des im Abgasstrom enthaltenen Restsauerstoffes zu NO und Wasser umgesetzt wird,
- das so entstandene NO und eventuell noch im Abgasstrom vorhandenes NO zusammen mit im Abgasstrom vorhandenem Restsauerstoff an den gleichen Oberflächenteilen zu NO₂ oxidiert wird,
- das so entstandene NO₂ und eventuell noch im Abgasstrom vorhandenes NO₂ zusammen mit den im Abgasstrom vorhandenen Resten an NO und dem im Abgasstrom vorhandenen restlichen NH₃ an den Oberflächenteilen der Strömungskanäle die SCR-Aktivität aufweisen mittels selektiver katalytischer Reduktion zu Stickstoff und Wasser umgesetzt wird, **dadurch gekennzeichnet, dass**
- der wenigstens eine Bereich mit SCR-Aktivität (12, 17) und der wenigstens eine Bereich mit NH₃-Oxidationsaktivität (10, 16') in den Strömungskanälen (13, 15') quasi parallel zueinander angeordnet sind, derart dass der Katalysator über Strömungskanäle verfügt, innerhalb derer zueinander NH₃-Oxidationsaktivität und SCR-Aktivität benachbart sind.

2. Anordnung nach Anspruch 1, **dadurch gekennzeichnet, dass** die Strömungskanäle (13, 15') auf einem ersten Teil ihres Umfanges entlang ihrer Längsausdehnung einen Bereich mit SCR-Aktivität (12, 17) und auf einem zweiten Teil ihres Umfanges entlang ihrer Längsausdehnung einen Bereich mit NH₃-Oxidationsaktivität (10, 16') aufweisen.

3. Anordnung nach Anspruch 1, **dadurch gekennzeichnet, dass** die Strömungskanäle (13, 15') entlang der Strömungsrichtung alternierend im Wechsel Bereiche mit NH₃-Oxidationsaktivität und Bereiche mit SCR-Aktivität aufweisen.

4. Anordnung nach einem der vorhergehenden Ansprüche, **dadurch gekennzeichnet, dass** die Strömungskanäle (13, 15') zueinander parallel oder zueinander in einem Winkel verlaufend ausgebildet sind.

5. Anordnung nach einem der vorhergehenden Ansprüche, **dadurch gekennzeichnet, dass** durch Perforation und/ oder Strömungsleitbleche in den Kanalwänden der Strömungskanäle (13, 15') zwischen jeweils wenigstens zwei benachbarten Strömungskanälen (13, 15') ein Strömungsaustausch stattfindet.

6. Anordnung nach einem der vorhergehenden Ansprüche, **dadurch gekennzeichnet, dass** der Teil der Strömungskanäle (13, 15'), der die SCR-Aktivität aufweist, V₂O₅ als Aktivkomponente enthält.

7. Anordnung nach einem der vorhergehenden Ansprüche, **dadurch gekennzeichnet, dass** der Teil der Strömungskanäle (13, 15'), der die SCR-Aktivität aufweist, eisen- und/oder kupfer-und/oder kobalthaltige Zeolithe enthält.

8. Anordnung nach einem der vorhergehenden Ansprüche, **dadurch gekennzeichnet, dass** der Teil der Strömungskanäle (13, 15'), der die NH₃-Oxidationsaktivität aufweist, als Aktivkomponenten Platin und/oder Palladium und/oder Iridium und/oder Rhodium und/oder Ruthenium und/oder Kobalt und/oder Nickel und/oder deren Oxid und/oder IrTiOₓ enthält.

9. Anordnung nach Anspruch 8, **dadurch gekennzeichnet, dass** die Aktivkomponenten in eine Matrix aus Zeolithen eingebettet sind.

10. Anordnung nach Ansprüche 7 und 9, **dadurch gekennzeichnet, dass** die Zeolithe vom Typ ZSM-5 und/oder OSI und/oder EPI und/oder AEN und/oder MFI und/oder FAU und/oder BEA sind.

11. Anordnung nach einem der Ansprüchen 1 - 10, **dadurch gekennzeichnet, dass** es sich bei dem zweiten Katalysatorelement (6') um einen durch Extrudieren hergestellten Vollkatalysator handelt, wobei die unterschiedlich aktiven Bereiche in den Strömungskanälen beim Extrudiervorgang erzeugt werden.

12. Anordnung nach einem der Ansprüchen 1 - 10, **dadurch gekennzeichnet, dass** das zweite Katalysatorelement (6') ein Lagenkatalysator ist und es sich bei den Lagen um Vollkatalysatorlagen oder um mit Katalysatormaterial beschichtete Lagen handelt, wobei die Beschichtung auf Metall- und/oder Keramikträger und/oder auf Glas- und/oder Keramik- und/oder Silikatmatten aufgebracht ist.

13. Anordnung nach einem der vorhergehenden Ansprüche, **dadurch gekennzeichnet, dass** das erste Katalysatorelement und das zweite Katalysatorelement auf einem gemeinsamen Träger angeordnet und/ oder einstückig ausgeführt sind.

14. Anordnung nach einem der vorhergehenden Ansprüche, **dadurch gekennzeichnet, dass** das erste Katalysatorelement (5) und das zweite Katalysatorelement (6') aus einzelnen Lagen bestehen, die einen im Querschnitt wabenförmigen, einzelne Strömungskanäle (13, 15') umfassenden Katalysatorkörper ausbilden, wobei die einzelnen Lagen beiden Katalysatorelementen (5, 6') gemeinsam sind und in ihrem das erste Katalysatorelement (5) bildenden Bereich SCR-Aktivität und in ihrem das zweite Katalysatorelement (6') ausbildende Bereich von Lage zu Lage abwechselnd SCR-Aktivität und NH₃-Oxidationsaktivität aufweisen.

15. Anordnung nach einem der vorhergehenden Ansprüche, **dadurch gekennzeichnet, dass** das die SCR-Aktivität ausbildende Katalysatormaterial im Bereich des ersten Katalysatorelements (5) unterschiedlich ist zu dem Katalysatormaterial, das die SCR-Aktivität im zweiten Katalysatorelement (6') ausbildet.

16. Anordnung nach einem der vorhergehenden Ansprüche, **dadurch gekennzeichnet, dass** das die SCR-Aktivität ausbildende Katalysatormaterial im Bereich des ersten Katalysatorelementes (5) und/ oder im Bereich des zweiten Katalysatorelementes (6') in seiner chemischen Zusammensetzung entlang der Strömungsrichtung des Abgases variiert.

17. Anordnung nach einem der vorhergehenden Ansprüche, **dadurch gekennzeichnet, dass** das die NH₃-Oxidationsaktivität des zweiten Katalysatorelementes (6') ausbildende Katalysatormaterial in seiner chemischen Zusammensetzung entlang der Strömungsrichtung des Abgases variiert.

18. Anordnung nach einem der vorhergehenden Ansprüche, **dadurch gekennzeichnet, dass** der Anordnung aus erstem Katalysatorelement (5) und zweitem Katalysatorelement (6') ein platin- und/oder platinoxidhaltiger Oxidationskatalysator (4) zur Oxidation von NO zu NO₂ vorgeschaltet ist.

19. Anordnung nach einem der vorhergehenden Ansprüche, **dadurch gekennzeichnet, dass** der Anordnung aus erstem Katalysatorelement (5) und zweitem Katalysatorelement (6') ein Hydrolysekatalysator (3) zur besseren Umsetzung des Reduktionsmittels in NH₃ vorgeschaltet ist.

20. Anordnung nach Ansprüchen 16 und 17, **dadurch gekennzeichnet, dass** der Oxidationskatalysator (4) und der Hydrolysekatalysator (3) im Abgasstrom parallel zueinander angeordnet sind und die Zuführung des Reduktionsmittels unmittelbar vor den Hydrolysekatalysator (3) erfolgt.

21. Anordnung nach einem der vorhergehenden Ansprüche, **dadurch gekennzeichnet, dass** die Bereiche des Katalysators mit unterschiedlicher Aktivität durch Tauchen des Trägers in unterschiedliche, den jeweiligen Katalysator enthaltende Lösung aufgebracht und anschließend kalziniert sind.

22. Anordnung nach einem der vorhergehenden Ansprüche, **dadurch gekennzeichnet, dass** die Bereiche des Katalysators mit unterschiedlicher Aktivität durch Imprägnieren einer bereits auf den Träger aufgebrachten Katalysatorschicht oder eines Vollkatalysators erzeugt sind.

23. Anordnung nach einem der vorhergehenden Ansprüche, **dadurch gekennzeichnet, dass** bei Verwendung eines Metallfolienträgers und/oder einer Glas- und/oder Keramik- und/oder Silikatmatten die einzelnen Metallfolien und/ oder Matten vor dem Aufrollen oder Aufschichten zu einem Wabenkörper durch Besprühen und/oder Bestreichen und/oder Tauchen beschichtet sind.

## Claims

1. An arrangement for reducing nitrogen oxides in the exhaust of internal combustion engines with the aid of ammonia added to the exhaust stream and/or reducing agents added to the exhaust stream, which release ammonia in the exhaust stream, consisting of a first catalyst element (5) with SCR activity for effecting a selective catalytic reduction and a subsequent second catalyst element (6') which is honeycomb-shaped in cross-section and forms individual flow channels (13, 15'), the flow channels (13, 15') of the second catalyst element (6') each having both at least one region with SCR activity (12, 17) and also at least one region with NH₃ oxidation activity (10, 16') on their inner surfaces, and wherein
- in the first catalyst element with SCR activity nitrogen oxides present in the exhaust stream are reacted to form nitrogen and water with the aid of the NH₃ present in the exhaust stream by way of selective catalytic reduction,
- NH₃ not reacted by the selective catalytic reduction is reacted in the second catalyst element to NO and water on the surface parts of the flow channels which have NH₃ oxidation activity, with the aid of the residual oxygen contained in the exhaust stream,
- the resulting NO and any NO still present in the exhaust stream together with residual oxygen present in the exhaust stream is oxidised to NO₂ on the same surface parts,
- the resulting NO₂ and any NO₂ still present in the exhaust stream together with the remnants of NO present in the exhaust stream and the residual NH₃ present in the exhaust stream is reacted by means of selective catalytic reduction on the surface parts of the flow channels which have SCR activity to form nitrogen and water,
**characterised in that** the at least one region with SCR activity (12, 17) and the at least one region with NH₃ oxidation activity (10, 16') are arranged in the flow channels (13, 15') virtually parallel to one another, such that the catalyst has flow channels within which NH₃ oxidation activity and SCR activity are adjacent to one another.

2. An arrangement according to Claim 1, **characterised in that** the flow channels (13, 15') on a first part of their periphery have along their longitudinal extent a region with SCR activity (12, 17) and on a second part of their periphery along their longitudinal extent a region with NH₃ oxidation activity (10, 16').

3. An arrangement according to Claim 1, **characterised in that** the flow channels (13, 15') have alternating along the direction of flow in alternation regions with NH₃ oxidation activity and regions with SCR activity.

4. An arrangement according to one of the preceding claims, **characterised in that** the flow channels (13, 15') are designed parallel to one another or running towards one another at an angle.

5. An arrangement according to one of the preceding claims, **characterised in that** an exchange of flow takes place by perforation and/or flow baffle plates in the channel walls of the flow channels (13, 15') between at least two adjacent flow channels (13, 15') in each case.

6. An arrangement according to one of the preceding claims, **characterised in that** the part of the flow channels (13, 15') which has the SCR activity contains V₂O₅ as active constituent.

7. An arrangement according to one of the preceding claims, **characterised in that** the part of the flow channels (13, 15') which has the SCR activity contains iron- and/or copper- and/or cobalt-containing zeolites.

8. An arrangement according to one of the preceding claims, **characterised in that** the part of the flow channels (13, 15') which has the NH₃ oxidation activity contains platinum and/or palladium and/or iridium and/or rhodium and/or ruthenium and/or cobalt and/or nickel and/or their oxides and/or IrTiOₓ as active constituents.

9. An arrangement according to Claim 8, **characterised in that** the active constituents are embedded in a matrix of zeolites.

10. An arrangement according to Claims 7 and 9, **characterised in that** the zeolites are of the type ZSM-5 and/or OSI and/or EPI and/or AEN and/or MFI and/or FAU and/or BEA.

11. An arrangement according to one of Claims 1 - 10, **characterised in that** the second catalyst element (6') is a solid catalyst produced by extrusion, the regions of different activity in the flow channels being produced upon the extrusion operation.

12. An arrangement according to one of Claims 1 - 10, **characterised in that** the second catalyst element (6') is a layered catalyst and the layers are solid catalyst layers or layers coated with catalyst material, the coating being applied to metal and/or ceramic supports and/or to glass and/or ceramic and/or silicate mats.

13. An arrangement according to one of the preceding claims, **characterised in that** the first catalyst element and the second catalyst element are arranged and/or designed in one piece on a common support.

14. An arrangement according to one of the preceding claims, **characterised in that** the first catalyst element (5) and the second catalyst element (6') consist of individual layers which form a catalyst body which is honeycomb-shaped in cross-section and comprises individual flow channels (13, 15'), the individual layers being common to both catalyst elements (5, 6') and have SCR activity in their region forming the first catalyst element (5) and alternately from layer to layer SCR activity and NH₃ oxidation activity in their region forming the second catalyst element (6').

15. An arrangement according to one of the preceding claims, **characterised in that** the catalyst material forming the SCR activity in the region of the first catalyst element (5) is different from the catalyst material which forms the SCR activity in the second catalyst element (6').

16. An arrangement according to one of the preceding claims, **characterised in that** the catalyst material forming the SCR activity in the region of the first catalyst element (5) and/or in the region of the second catalyst element (6') varies in its chemical composition along the direction of flow of the exhaust.

17. An arrangement according to one of the preceding claims, **characterised in that** the catalyst material forming the NH₃ oxidation activity of the second catalyst element (6') varies in its chemical composition along the direction of flow of the exhaust.

18. An arrangement according to one of the preceding claims, **characterised in that** the arrangement of first catalyst element (5) and second catalyst element (6') is preceded by a platinum- and/or platinum oxide-containing oxidation catalyst (4) for the oxidation of NO to NO₂.

19. An arrangement according to one of the preceding claims, **characterised in that** the arrangement of first catalyst element (5) and second catalyst element (6') is preceded by a hydrolysis catalyst (3) for better conversion of the reducing agent into NH₃.

20. An arrangement according to Claims 16 and 17, **characterised in that** the oxidation catalyst (4) and the hydrolysis catalyst (3) are arranged parallel to one another in the exhaust stream and the supply of the reducing agent takes place immediately before the hydrolysis catalyst (3).

21. An arrangement according to one of the preceding claims, **characterised in that** the regions of the catalyst with different activity are applied by dipping the support into different solutions containing the respective catalyst and are then calcined.

22. An arrangement according to one of the preceding claims, **characterised in that** the regions of the catalyst with different activity are produced by impregnating a catalyst layer already applied to the support or a solid catalyst.

23. An arrangement according to one of the preceding claims, **characterised in that** when using a metal foil support and/or [a] glass and/or ceramic and/or silicate mats the individual metal foils and/or mats are coated by spraying and/or brushing and/or dipping before being rolled up or layered to form a honeycomb body.

## Revendications

1. Dispositif pour diminuer la teneur en oxydes d'azote contenus dans les gaz d'échappement des moteurs à combustion interne avec de l'ammoniac ajouté à la veine des gaz d'échappement et/ou d'agents réducteurs ajoutés à la veine des gaz d'échappement qui libèrent de l'ammoniac dans la veine des gaz d'échappement, dispositif comprenant :
- un premier élément catalyseur (5) d'activité SCR pour produire une réduction catalytique sélective, est suivi d'un second élément catalyseur (6') à canaux d'écoulement séparés (13, 15'), à section en nids d'abeilles,
- la surface intérieure respective des canaux d'écoulement (13, 15') du second élément catalyseur (6') présente à la fois au moins une zone d'activité SCR (12, 17) et au moins une zone d'activité d'oxydation NH₃ (10, 16'), et
- dans le premier élément catalyseur d'activité SCR, au cours de la réduction catalytique sélective, les oxydes d'azote de la veine des gaz d'échappement sont transformés en azote et en eau par le composant NH₃ présent dans la veine des gaz d'échappement, et
- la réduction catalytique sélective du composant NH₃, non encore transformé dans le second élément catalyseur, dont les parties de surface des canaux d'écoulement ont une activité d'oxydation NH₃, transforme ce composant avec l'oxygène résiduel contenu dans la veine des gaz d'échappement, en oxyde d'azote NO et en eau,
- l'oxyde d'azote NO ainsi généré et l'oxyde d'azote NO éventuellement encore présent dans la veine des gaz d'échappement sont oxydés ensemble avec l'oxygène résiduel de la veine des gaz d'échappement sur les mêmes parties de surface pour donner l'oxyde d'azote NO₂,
- l'oxyde d'azote NO₂ ainsi généré et éventuellement l'oxyde d'azote NO₂ encore présent dans la veine des gaz d'échappement sont convertis avec les restes d'oxyde NO encore présents dans la veine des gaz d'échappement et les restes de NH₃ encore présent dans la veine des gaz d'échappement sur les parties de surface des canaux d'écoulement à activité SCR par réduction catalytique sélective pour donner de l'azote et de l'eau,
**caractérisé en ce que**
- au moins une zone d'activité SCR (12, 17) et au moins une zone d'activité d'oxydation NH₃ (10, 16') sont installées dans les canaux d'écoulement (13, 15') d'une manière quasiment parallèle de façon que le catalyseur dispose de canaux d'écoulement dans lesquels l'activité d'oxydation NH₃ et l'activité SCR sont voisines.

2. Dispositif selon la revendication 1,
**caractérisé en ce que**
sur une première partie de leur périphérie, suivant leur extension longitudinale, les canaux d'écoulement (13, 15') ont une zone d'activité SCR (12, 17) et sur une seconde partie de leur périphérie suivant leur extension longitudinale, une zone d'activité d'oxydation NH₃ (10, 16').

3. Dispositif selon la revendication 1,
**caractérisé en ce que**
dans la direction d'écoulement, les canaux d'écoulement (13, 15') présentent une alternance de zones d'activité d'oxydation NH₃ et de zones d'activité SCR.

4. Dispositif selon les revendications précédentes,
**caractérisé en ce que**
les canaux d'écoulement (13, 15') sont parallèles ou font entre eux un certain angle.

5. Dispositif selon les revendications précédentes,
**caractérisé en ce que**
des perforations et/ou des tôles de guidage d'écoulement dans les parois des canaux d'écoulement (13, 15') produisent un échange d'écoulements entre chaque fois au moins deux canaux d'écoulement voisins (13, 15').

6. Dispositif selon les revendications précédentes,
**caractérisé en ce que**
la partie des canaux d'écoulement (13, 15') présentant l'activité SCR contient l'oxyde de vanadium V₂O₅ comme composant actif.

7. Dispositif selon les revendications précédentes,
**caractérisé en ce que**
la partie des canaux d'écoulement (13, 15') présentant l'activité SCR contient une zéolithe contenant du fer et/ ou du cuivre et/ ou du cobalt.

8. Dispositif selon les revendications précédentes,
**caractérisé en ce que**
la partie des canaux d'écoulement (13, 15') présentant une activité d'oxydation NH₃ contient comme composant actif, du platine et/ou du palladium et/ou de l'iridium et/ou du rhodium et/ou du ruthénium et/ou du cobalt et ou du nickel et/ou leurs oxydes et/ou IrTiOx.

9. Dispositif selon la revendication 8,
**caractérisé en ce que**
les composants actifs sont intégrés dans une matrice de zéolithes.

10. Dispositif selon les revendications 7 et 9,
**caractérisé en ce que**
les zéolithes sont du type ZSM-5 et/ou OSI et/ou EPI et/ou AEN et/ou MFI et/ou FAU et/ou BEA.

11. Dispositif selon les revendications 1 à 10,
**caractérisé en ce que**
le second élément catalyseur (6') est un catalyseur plein, fabriqué par extrusion et les zones d'activité différente sont réalisées au cours de l'opération d'extrusion dans les canaux d'écoulement.

12. Dispositif selon les revendications 1 à 10
**caractérisé en ce que**
le second élément catalyseur (6') est un catalyseur de couches qui sont des couches complètes de catalyseur ou des couches revêtues de matériaux catalyseurs,
le revêtement étant appliqué sur un support en métal et/ou en céramique et/ou en verre et/ou en céramique et/ ou des nappes de silicate.

13. Dispositif selon les revendications précédentes,
**caractérisé en ce que**
le premier élément catalyseur et le second élément catalyseur sont installés sur un support commun et/ou sont réalisés en une seule pièce.

14. Dispositif selon les revendications précédentes,
**caractérisé en ce que**
le premier élément catalyseur (5) et le second élément catalyseur (6') sont composé de couches séparées formant un corps de catalyseur ayant en section une structure en nids d'abeilles avec des canaux d'écoulement séparés (13, 15'),
les différentes couches des deux éléments catalyseur (5, 6') étant communes et dans leurs zones d'activité SCR constituant le premier élément catalyseur (5) et leurs zones constituant le second élément catalyseur (6'), elles présentent une alternance d'activité SCR et d'activité d'oxydation NH₃ variant d'une couche à l'autre.

15. Dispositif selon les revendications précédentes,
**caractérisé en ce que**
le matériau catalyseur assurant l'activité SCR dans la zone du premier élément catalyseur (5) est différente du matériau catalyseur qui assure l'activité SCR dans le second élément catalyseur (6').

16. Dispositif selon les revendications précédentes,
**caractérisé en ce que**
le matériau catalyseur qui réalise l'activité SCR dans la zone du premier élément catalyseur (5) et/ou dans la zone du second élément catalyseur (6') varie dans sa composition chimique suivant la direction d'écoulement des gaz d'échappement.

17. Dispositif selon les revendications précédentes,
**caractérisé en ce que**
le matériau catalyseur qui assure l'activité d'oxydation NH₃ du second élément catalyseur (6') varie dans sa composition chimique suivant la direction d'écoulement des gaz d'échappement.

18. Dispositif selon les revendications précédentes,
**caractérisé en ce que**
le dispositif composé du premier élément catalyseur (5) et du second élément catalyseur (6') est précédé par un catalyseur d'oxydation (4) contenant du platine et/ou un oxyde de platine pour oxyder l'oxyde d'azote NO en oxyde d'azote NO₂.

19. Dispositif selon les revendications précédentes,
**caractérisé en ce que**
le dispositif formé d'un premier élément catalyseur (5) et d'un second élément catalyseur (6') est précédé d'un catalyseur d'hydrolyse (3) pour mieux convertir l'agent réducteur en NH₃.

20. Dispositif selon les revendications 16 et 17,
**caractérisé en ce que**
le catalyseur d'oxydation (4) et le catalyseur d'hydrolyse (3) sont installés en parallèle dans la veine des gaz d'échappement et l'alimentation en agent réducteur se fait directement avant le catalyseur d'hydrolyse (3).

21. Dispositif selon les revendications précédentes,
**caractérisé en ce que**
les zones du catalyseur à activités différentes sont appliquées par immersion du support dans une solution différente contenant le catalyseur respectif et ensuite les zones sont calcinées.

22. Dispositif selon les revendications précédentes,
**caractérisé en ce que**
les zones du catalyseur à activités différentes sont obtenues par imprégnation d'une couche de catalyseur déjà appliquée sur le support ou d'un catalyseur complet.

23. Dispositif selon les revendications précédentes,
**caractérisé en ce que**
dans l'utilisation d'un support à film métallique et/ou d'un verre et/ou d'une céramique et/ou de nappes de silicate, les différents films métalliques et/ou les nappes, avant enroulement ou stratification pour former un corps en nids d'abeilles, sont revêtus par pulvérisation et/ou enduction et/ou immersion.
